# EUROPEAN PATENT APPLICATION

(11) **EP 2 236 893 A2**
(43) Date of publication of application: **06.10.2010**
(21) Application number: 10250668.0
(22) Date of filing: 30.03.2010
(51) Int. Cl.: F16L 27/06

(54) **An improved coupling joint for a nozzle**

(30) Priority: 30.03.2009 GB 0905481
(71) Applicant: Delta Fire Limited, Rackheath Industrial Estate Norwich NR13 6PL (GB)
(72) Inventor: Gardner, Ian, Norwich, Norfolk NR13 6PL (GB)
(74) Representative: Harrison, Paul Richard

(57) **Abstract**

A joint for securing a nozzle to a fluid bearing conduit such as a pipe or hose, the joint comprising:
a first connector (11) connectable at a first end to a conduit, the connector having an internal fluid passage (24) to allow fluid to flow through a conduit through the joint;
a ball swivel (21) connected at a first end to the first connector, the second end of the ball swivel (21) including a ball swivel head having a substantially spherical outer surface, the ball swivel having an internal fluid passage (23),
the ball swivel head being housed within an internal socket housing of a second connector (19) in a ball and socket arrangement, said second connector (19) having an internal fluid passage (24) the internal fluid passages of the first connector, ball swivel head and the second connector co-operating to form a continuous fluid conduit;
the joint including a first and second sealing rings (13, 14) located each end of the socket housing to form a seal between the swivel head and the housing,
a third seal (12) intermediate the first and second sealing rings, substantially equatorial of the ball swivel head.

## Description

### Field of the Invention

The present invention relates to a coupling within a fluid conduit. In particular, the coupling is for use in conjunction with a nozzle, especially particularly a handheld nozzle such as is used by fire-fighting services.

### Background to the Invention

The present invention is described below with particular reference to use as part of a fire-fighting nozzle. It will be recognised that the joint described is also able to be used in other situations where a nozzle is employed.

Fire services need to deliver large volumes of water/foam or a mixture thereof in a highly directed manner, delivering a variety of spray patterns as required by the user. This is usually achieved by delivery of the water through a flexible hose connecting the water source and the final, delivery location. In order to direct the water, a nozzle is fixed to the end of the hose, the nozzle enabling the user to control the water flow.

Although nozzles can be mounted to a fixed or mobile framework, in many situations the nozzle is carried by the fire-fighter and directed by hand. Modem nozzles incorporate a large degree of functionality to give the fire-fighter the required flexibility of control of the water jet. Nevertheless one area which has not been well addressed in the art is the mounting of the nozzle in a flexible manner enabling the direction of the nozzle to be rapidly varied in the lateral or vertical direction without having to move at least the end of the hose, attached to the nozzle. This is important since the hose, becomes more rigid as the pressure increases and therefore, the direction of the jet or spray pattern is more difficult to manoeuvre: in many cases the operator needs physically to change his stance. Joints within a nozzle assembly are known which allow continuous movement of the end of the nozzle in two directions, but these are prone to damage as any dirt particles such as grit caught up in the flow of water can cause scratching and surface damage and ultimately leakage from the joint.

For example, a ball swivel type device in which a ball having a conduit for water across its central axis, the ball being housed within a spherical housing, is known. Often seals are used around the inlet and the outlet to prevent leakage. The above mentioned grit however scratches the outer surface of the ball and/or the inner surface of the seals creating channels for water to leak through. The leaking joint is not only expensive to replace on a regular basis, but can also increase the danger to the fire-fighter. Leaking water, spraying or dripping onto the protective clothing of a fire fighter in a hot fire environment can be very dangerous.

It is an object of the present invention to provide a joint which addresses the above problems.

### Summary of the Invention

According to the invention there is provided a joint for securing a nozzle to a fluid bearing conduit such as a pipe or hose, the joint comprising:
a first connector connectable at a first end to a conduit, the connector having an internal fluid passage to allow fluid to flow through a conduit through the joint;
a ball swivel connected at a first end to the first connector, the second end of the ball swivel including a ball swivel head having a substantially spherical outer surface, the ball swivel having an internal fluid passage,
the ball swivel head being housed within an internal socket housing of a second connector in a ball and socket arrangement, said second connector having an internal fluid passage the internal fluid passages of the first connector, ball swivel head and the second connector co-operating to form a continuous fluid conduit;
the joint including a first and second sealing rings located each end of the socket housing to form a seal between the swivel head and the housing,
a third seal intermediate the first and second sealing rings, substantially equatorial of the ball swivel head.

One or both of the first and second sealing rings is advantageously retained in position by a swivel housing cap, said cap co-operating with the housing to retain the rings.

The inclusion of a third seal intermediate the first two seals allows this seal to operate in an area which is largely protected from the ingress of grit or other particles reducing the chances of grit penetrating and causing damage to that part of the ball swivel head or this third seal. The third seal is optionally located within a channel formed in the housing to support the third seal.

Advantageously, the ball swivel head includes one or more grooves enabling simpler assembly and disassembly of the joint.

Preferably the joint includes one or more O-rings located between either or both of the first and the second seal and the socket housing to improve compression on the seal and so improve new seal form.

Optionally, the second connector includes a stop surface to limit the extent to which the socket housing can swivel with respect to the ball swivel head.

### Brief Description of the Drawings

The invention will now be described with respect to the accompanying drawings which show by way of example only two embodiments of a joint. In the drawings:
Figure 1 illustrates a longitudinal sectional view through a first embodiment of a joint;
Figure 2 is a perspective view of the joint of Figure 1;
Figure 3 illustrates a longitudinal sectional view through a second embodiment of a joint; and
Figure 4 is a perspective view of the joint of Figure 3.

### Detailed Description of the Invention

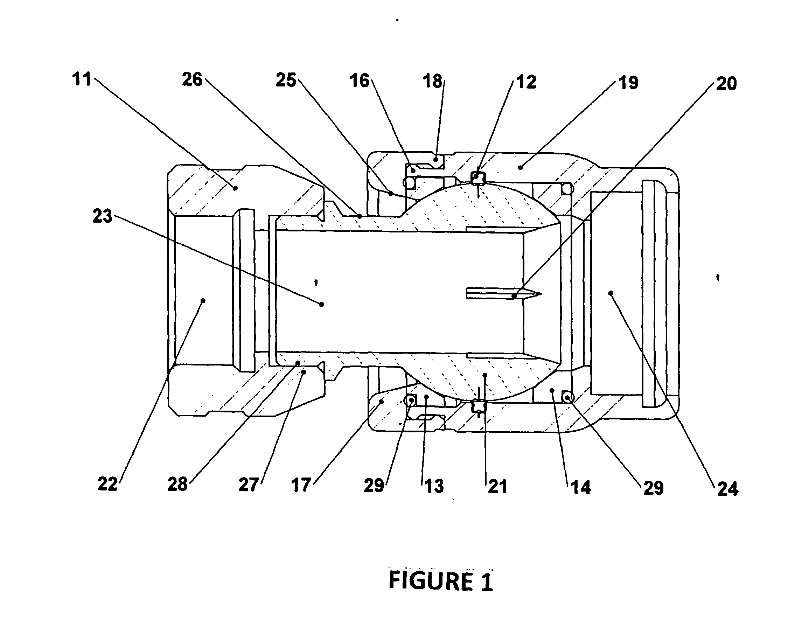

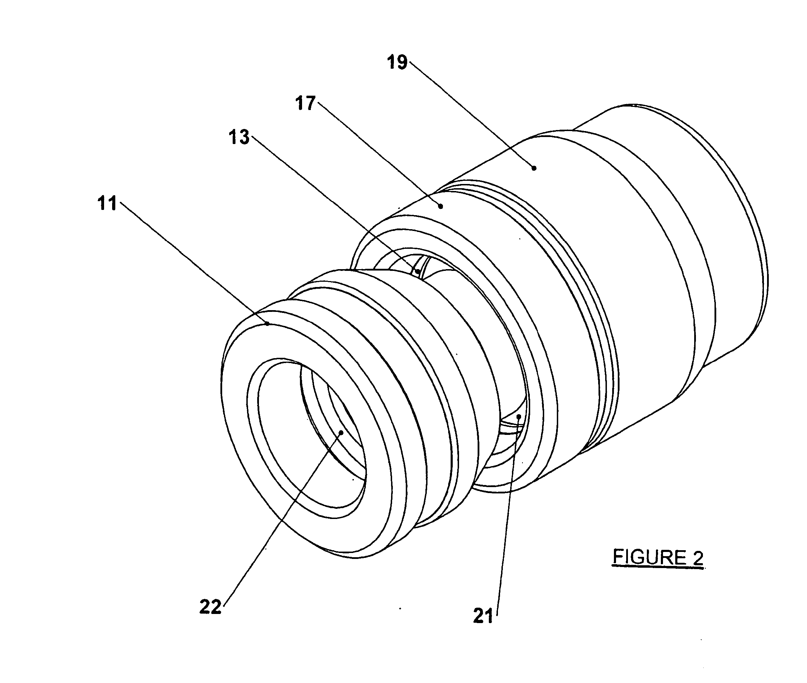

Referring initially to Figures 1 and 2, the operation of the ball joint can be seen. The inlet adaptor body 11 is fixed relative to the fire supply hose and is shown with a female internal thread. The fitment can however be a male thread or an integral International fitting. The inlet swivel adaptor has an internal fluid passage 22 which connects with the internal fluid passage 23 of the ball swivel attachment 21 and the internal fluid passage 24 of the ball swivel housing 19. The inlet adaptor 11 has a female threaded portion 27 into which is screwed the male threaded end 28 of the ball swivel attachment 21. Internal location grooves 20, on the inside surface of the ball swivel attachment 21, assist in the assembly and disassembly of the joint by providing a surface against which a tool can exert a force.

The ball part of the ball swivel attachment 21 is housed in the main ball swivel housing 19 and is held in position by two annular bearing seals 13, 14 on either side of the ball. A swivel housing cap 17 secures the assembly having a female thread 18 which threadably engages a thread 16 which tightens the bearing seals 13, 14 onto the concentric surface of the ball. Although not essential, O-ring seals 29 can be included to urge the seals 13, 14 into sealing engagement.

This arrangement allows for a spherical movement of the ball swivel housing 19 about the central axis into any position subject to a limit caused by the interaction of surface 25 against surface 26. Altering the angle of surface 25 relative to the fluid passage central axis, changes the freedom of the outside movement of the ball swivel housing 19.

The ball swivel housing 19 is affixed to the inlet part of the nozzle via a threaded section, a ball bearing racer groove or other means of attachment.

The outlet bearing seal 14 is the primary fluid seal which also serves to protect the safety seal 12. This seal operates in a clean "protected" zone not subject to the ingress of grit and particles in the same way as prior art. The safety seal 12 can be located within a channel in the swivel housing 19, the channel acting to support the safety seal 12.

The normal function of the inlet bearing seal 13 is to serve as a bearing but it also serves as a final seal. All three seals must fail for this swivel joint to leak.

Although the adapter body 11 and the ball swivel housing 19 in the above described embodiment are formed separately and brought together by the means described, these elements can be formed integrally.

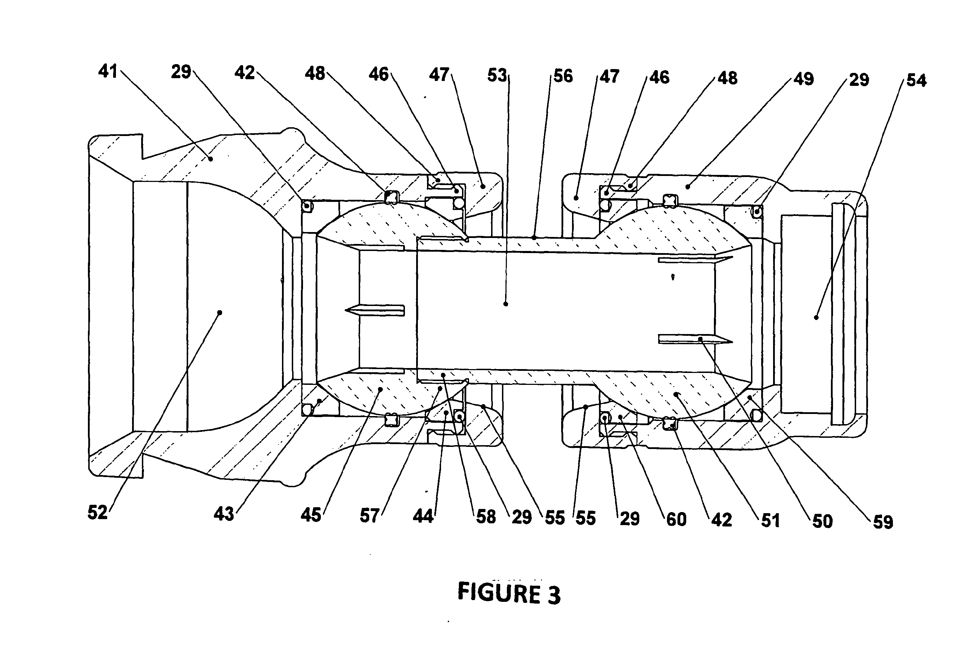

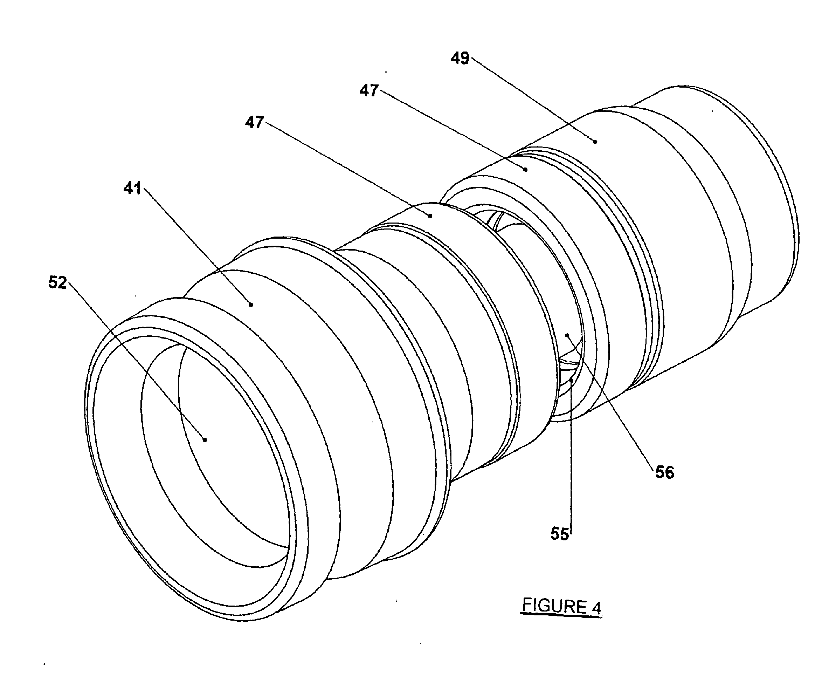

Turning now to Figures 3 and 4, these illustrate a second embodiment in which two ball and socket joints of the type shown in Figures 1 and 2 are employed in the joint. The operation of the ball joints can be seen from the inlet ball swivel housing 41. This is fixed relative to the fire supply hose and is shown in a male British instantaneous coupling but it can be threaded or any integral international fitting.

The inlet ball 45 is located in the inlet ball swivel housing and is held in position within a ball swivel housing 41 by two annular seals 43, 44 on either side of the ball 45. As in the first embodiment, an internal location grooves 50 assist in assembly and disassembly. A swivel housing cap 47 secures the assembly by screwing its female thread 48 onto the male thread 46 which tightens the bearing seals 43, 44 onto the concentric surface of the ball.

A cylindrical channel 53 extends from one end of the outlet ball 51 which then connects to the inlet ball 45 via a male thread 58 on the outer surface of the channel 53 and a female thread 57 on the inlet ball 45. The outlet ball is then held in position by two annular seals 59, 60 on either side of the ball. A swivel housing cap 47 secures the assembly by screwing its female thread 48 onto the male thread 46 which tightens the seals 59, 60 onto the concentric surface of the ball.

This arrangement of the second embodiment allows for a spherical movement of inlet ball swivel housing 41 and the outlet ball swivel housing 49, together with theinternal fluid passage 54 of the housing 49, about the central axis into any position subject to limit caused by the interaction of surface 55 against surface 56 altering the angle of surface 55 relative to the fluid passage central axis, changes the freedom of the outside movement of the ball swivel housings 41 and 49.

The outlet ball swivel housing 49 is affixed to the inlet part of the nozzle via a threaded section, a ball bearing racer groove or other means of attachment.

The bearing seals 43 and 59 are the primary fluid seals which also served to protect the safety seals 42. These safety seals 42 operate in a clean 'protected' zone not subject to the ingress of grit and particles in the same way as prior art.

The nominal function of bearing seals 44 and 60 are to serve as a bearing but they also serve as final seals, all three seals in either ball swivel joint must fail for these swivel joints to leak.

An advantageous feature of the second embodiment is the conjoined nature of the two swivel balls which reduces the overall length of the device, and hence improves operability, compared to twin separate ball swivels.

It will of course be understood that the invention is not limited to the specific details described herein, which are given by way of example only, and that various modifications and alterations are possible within the scope of the invention.

## Claims

1. A joint for securing a nozzle to a fluid bearing conduit such as a pipe or hose, the joint comprising:
a first connector (11) connectable at a first end to a conduit, the connector having an internal fluid passage (24) to allow fluid to flow through a conduit through the joint;
a ball swivel (21) connected at a first end to the first connector, the second end of the ball swivel (21) including a ball swivel head having a substantially spherical outer surface, the ball swivel having an internal fluid passage (23),
the ball swivel head being housed within an internal socket housing of a second connector (19) in a ball and socket arrangement, said second connector (19) having an internal fluid passage (24) the internal fluid passages of the first connector, ball swivel head and the second connector co-operating to form a continuous fluid conduit;
the joint including a first and second sealing rings (13, 14) located each end of the socket housing to form a seal between the swivel head and the housing,
a third seal (12) intermediate the first and second sealing rings, substantially equatorial of the ball swivel head.

2. A joint according to Claim 1, wherein the ball swivel head includes one or more grooves (20).

3. A joint according to any preceding claim, wherein the joint includes one or more O-rings (29) located between either or both of the first and the second seal and the socket housing.

4. A joint according to any preceding claim, wherein the second connector includes a stop surface to limit the extent to which the socket housing can swivel with respect to the ball swivel head.

5. A joint according to any preceding claim, having two ball swivel heads (45, 51), linked together by a conduit.

6. A joint according to any preceding claim wherein the third seal is housed in a channel, formed in the housing (19).

7. A joint according to any preceding claim, wherein one or both of the sealing rings (13, 14) is retained in position by a swivel housing cap (17) said cap (17) co-operating with the housing to retain the rings (13, 14).
